# DEMANDE DE BREVET EUROPEEN

(11) **EP 3 599 627 A1**
(43) Date de publication de la demande: **29.01.2020**
(21) Numéro de dépôt: 19187654.9
(22) Date de dépôt: 22.07.2019
(51) Int. Cl.: H01G 11/66, H01M 2/26, H01M 4/64, H01M 4/66, B29C 65/08

(54) **PROCÉDÉ DE FABRICATION D'UN COLLECTEUR DE COURANT ET DISPOSITIFS ASSOCIÉS**

(30) Priorité: 24.07.2018 FR 1856832
(71) Demandeur: Armor, 44100 Nantes (FR)
(72) Inventeur: HÖSCHEN, Sjamme Karl, 44400 REZE (FR); EVRARD, Jean-François Noel Marcel, 44116 Vieillevigne (FR)
(74) Mandataire: Lavoix

(57) **Abrégé**

La présente invention concerne un procédé de fabrication d'un collecteur de courant pour une batterie ou un supercondensateur, le procédé de fabrication comportant une phase de raccordement d'un élément métallique et d'un feuillard métallique revêtu d'un revêtement, le revêtement étant réalisé en un matériau de revêtement, le matériau de revêtement étant distinct du matériau du feuillard, la phase de raccordement comportant :
- une étape de superposition du feuillard et de l'élément métallique sur une surface de superposition, et
- une étape d'application d'ultrasons par une sonotrode (46) d'une soudeuse à ultrasons sur la surface de superposition le long d'une ligne pour souder la surface de superposition.

## Description

La présente invention concerne un procédé de fabrication d'un collecteur de courant. La présente invention se rapporte aussi à un banc de raboutage correspondant ainsi qu'à un collecteur de courant obtenu à l'aide du procédé de raccordement et à un système comportant un tel collecteur.

Les batteries, c'est-à-dire un ensemble d'accumulateurs électrochimiques, sont utilisées dans de nombreux domaines en croissance comme les véhicules électriques.

Un accumulateur électrochimique comprend classiquement au moins quatre éléments: une électrode positive, une électrode négative, un électrolyte, ainsi que des collecteurs de courant pour chaque électrode. L'ensemble d'une électrode négative et d'un collecteur de courant forme une anode tandis que l'ensemble d'une électrode positive et d'un collecteur de courant forme une cathode.

Le principe de fonctionnement d'un accumulateur se base sur le stockage réversible de l'énergie électrique en énergie chimique par la mise en oeuvre de deux réactions électrochimiques séparées et couplées. Ce sont les électrodes positives et négatives, qui baignent dans l'électrolyte qui sont le siège des réactions électrochimiques, dites faradiques. Les électrodes sont notamment réalisées en des matériaux actifs permettant de stocker et de déstocker les ions via des réactions d'oxydation et de réduction.

Au cours de la décharge, le matériau actif de l'électrode négative s'oxyde et libère d'une part des électrons qui sont acheminés par l'intermédiaire du collecteur de courant vers le circuit extérieur et d'autre part des cations qui migrent au travers de l'électrolyte vers l'électrode positive. Ensuite, les électrons ayant traversé le circuit qui en a utilisé l'énergie et les cations sont captés par le matériau actif de l'électrode positive qui se réduit. La densité d'énergie qu'un accumulateur peut libérer est fonction à la fois du potentiel et de la capacité de la cellule électrochimique, tous deux étant directement reliés à la chimie du système. Le potentiel d'une batterie est déterminé par la différence entre les potentiels des réactions d'oxydoréduction se produisant simultanément aux électrodes positives et négatives.

Il résulte du fonctionnement d'un accumulateur que le collecteur de courant assure le transport électronique. La présente invention concerne plus spécifiquement la fabrication des collecteurs de courant qu'il est souhaitable d'améliorer étant donnée le nombre d'applications croissantes utilisant de tels éléments.

Le collecteur de courant est réalisé en un matériau suffisamment conducteur pour assurer le transport électronique, léger, fin, mécaniquement résistant pour servir de substrat à l'électrode. Le matériau conducteur formant le substrat peut optionnellement être revêtu d'au moins une couche de revêtement servant d'interface entre le collecteur de courant et l'électrode (cathode ou anode) de la batterie.

Le procédé de fabrication d'un collecteur de courant revêtu est un processus continu, connu sous le nom de procédé au déroulé, dans lequel un revêtement est déposé par enduction sur le substrat enroulé. Un tel procédé de fabrication comprend les étapes de fourniture du substrat ; formation d'un revêtement par dépôt d'une suspension sur la surface du substrat ; séchage de la suspension déposée. De tels procédés permettent une fabrication continue et efficace, puisque le substrat est présenté sous la forme d'un grand rouleau de dizaines, centaines ou milliers de mètres enroulés selon la direction longitudinale, le revêtement est appliqué de manière quasi-continue sur le substrat tout en déroulant le substrat. Cependant, pour répondre aux spécifications en termes de longueur de bobine, il est nécessaire de pouvoir relier les extrémités transversales de deux rouleaux enduits pour obtenir une bobine plus longue ou couper des zones défectueuses présentes dans une bobine et reconnecter les deux extrémités créées lors de la coupe.

Il existe donc un besoin pour un procédé de fabrication d'un collecteur de courant qui soit de mise en oeuvre plus simple et permette d'améliorer la qualité du collecteur de courant.

Pour cela, la présente description porte sur un procédé de fabrication d'un collecteur de courant pour une batterie ou un supercondensateur, le procédé de fabrication comportant une phase de raccordement d'un élément métallique et d'un feuillard métallique revêtu d'un revêtement, le revêtement étant réalisé en un matériau de revêtement, le matériau de revêtement étant distinct du matériau du feuillard, la phase de raccordement comportant une étape de superposition du feuillard et de l'élément métallique sur une surface de superposition, et une étape d'application d'ultrasons par une sonotrode d'une soudeuse à ultrasons sur la surface de superposition le long d'une ligne pour souder la surface de superposition.

Dans le cadre de sa démarche inventive, la demanderesse s'est intéressée aux procédés de fabrication actuellement utilisés dont les éléments les plus importants sont explicités dans ce qui suit.

Généralement, le collecteur de courant est réalisé en un feuillard métallique présentant une épaisseur (dimension mesurée le long de la dimension la plus faible) comprise entre 5 micromètres (µm) et 100 µm, préférentiellement entre 6 µm et 20 µm.

Le matériau utilisé pour un tel feuillard est, par exemple, du fer, du cuivre, de l'aluminium, du nickel, du titane ou de l'acier inoxydable.

De préférence, le matériau est non ferreux, l'aluminium et le cuivre étant les exemples les plus courants.

Un feuillard aluminium est préférentiellement produit par laminage à froid alors qu'un feuillard cuivre est obtenu par électro-déposition.

Le feuillard est revêtu d'au moins une couche de revêtement servant d'interface entre le collecteur de courant et l'électrode (cathode ou anode) de la batterie. L'ensemble des couches de revêtement forme le revêtement. Le matériau métallique formant le feuillard joue pour le revêtement le rôle d'un substrat.

La fonction de la couche de revêtement est notamment d'optimiser l'adhérence et la résistance de contact à l'interface entre le collecteur de courant et l'électrode. L'autre fonction majeure de la couche de revêtement est de permettre une protection du collecteur de courant, la corrosion des collecteurs de courant étant un phénomène assez répandu.

Les couches de revêtement peuvent être déposées sur une ou sur les deux faces du feuillard métallique, et sur tout ou partie de chacune des faces. L'expression « revêtu » couvre ainsi des cas où le feuillard est totalement revêtu et des cas où le feuillard est partiellement revêtu.

Il est à noter que les caractéristiques des couches de revêtement, épaisseur, motif, composition chimique, peuvent varier d'une face à l'autre, voire varier sur une même face.

Le revêtement est réalisé en un matériau, le matériau étant distinct du matériau du substrat.

Notamment, des particules métalliques peuvent être présentes dans le matériau du revêtement.

De telles particules peuvent présenter tout type de formes. De préférence, les particules sont sphériques.

Pour chaque particule, il est défini un diamètre comme la distance maximale entre deux points de la surface de la particule.

Le diamètre est, par exemple, mesuré par une technique de granulométrie laser.

La technique de mesure de la granulométrie par diffraction laser mesure la distribution granulométrique des particules en mesurant la variation angulaire de l'intensité lumineuse diffusée lorsqu'un faisceau laser traverse un échantillon de particules dispersées. Les grosses particules diffusent la lumière à de petits angles par rapport au faisceau laser et les petites particules diffusent la lumière à des angles supérieurs.

Parmi les particules du matériau de revêtement, le diamètre de chaque particule est inférieur ou égal à 100 µm.

De préférence, les particules sont des nanoparticules.

Les nanoparticules sont des particules dont chaque dimension est inférieure à 100 nanomètres.

En termes de composition chimique, de nombreuses possibilités pour le matériau du revêtement sont envisageables.

Le matériau du revêtement comprend, par exemple, un matériau conducteur.

De nombreux matériaux sont possibles pour le matériau conducteur : des exemples de matériau conducteur sont de manière non limitative les carbones conducteurs, noirs de carbones, graphites, graphènes, nanotubes de carbone, les fibres de charbon actif, les nanofibres de carbone non activées, les flocons métalliques, les poudres métalliques, les fibres métalliques et les polymères électriquement conducteurs ou des mélanges de ceux-ci.

Préférentiellement, le matériau du revêtement comprend un matériau liant et des particules conductrices.

De nombreux matériaux sont possibles pour le matériau liant tant que le matériau liant est inerte par rapport aux matériaux utilisés pour l'électrode.

Le matériau liant est un matériau habituellement polymérique, qui permet de faciliter la manipulation des revêtements lors de leur fabrication.

Des exemples de matériau liant sont, de manière non limitative, les polytétrafluoroéthylènes, les fluorures de polyvinylidène (aussi désignés sous l'abréviation PVF 2 ou PVDF), les caoutchoucs éthylène-propylène-diène (aussi désignés sous l'abréviation EPDM), les oxydes de polyéthylène (aussi désignés sous l'abréviation PEO), les acrylates durcissables sous l'effet d'un rayonnement ultraviolet, les méthacrylates durcissables sous l'effet d'un rayonnement ultraviolet et les divinyl éthers durcissables sous l'effet de la chaleur et leurs analogues.

D'autres matériaux liants approprié comprennent des polymères réticulés, tels que les polymères fabriqués à partir de polymères ayant des groupes carboxyle et des agents de réticulation.

Plus généralement, le matériau liant est un matériau constitué d'un ou plusieurs polymères choisis parmi les polymères thermoplastiques, les polymères thermodurcissables, les élastomères, et les mélanges de ceux-ci.

Comme exemple de polymères thermoplastiques, il peut être cité les polymères issus de la polymérisation de monomères vinyliques aliphatiques ou cycloaliphatiques, tels que des polyoléfines (parmi lesquels les polyéthylènes ou encore les polypropylènes). Il peut également être cité les polymères issus de la polymérisation de monomères vinyliques aromatiques, tels que les polystyrènes, les polymères issus de la polymérisation de monomères acryliques et/ou de (méth)acrylates, les polyamides, les polyéthercétones et les polyimides.

Des résines thermodurcissables comme des résines époxydes, des résines polyesters mélangées avec des polyuréthanes ou avec des polyéthers polyols sont des exemples de polymères thermodurcissables.

A titre d'illustration, les polymères élastomères sont des caoutchoucs naturels, des caoutchoucs de synthèse, des copolymères styrène-butadiène (connus également sous l'abréviation « SBR »), des copolymères éthylène-propylène (connus également sous l'abréviation « EPM ») ou des silicones.

La teneur en matériau liant dans le revêtement est de préférence supérieure ou égale à 30% en poids.

Par ailleurs, dans certains cas, le revêtement comprend un ou plusieurs types d'additifs conducteurs pour améliorer la conductivité électronique.

Des exemples d'additifs conducteurs comprennent, de façon non limitative, les carbones conducteurs, les graphites, graphènes, nanotubes de carbone, les fibres de charbon actif, les nanofibres de carbone non activées, les flocons métalliques, les poudres métalliques, les fibres métalliques et les polymères électriquement conducteurs.

La quantité d'additifs conducteurs, si présente, est supérieure à 10% en poids du revêtement.

Le revêtement présente une épaisseur comprise entre 10 nanomètres (nm) et 100 µm, préférentiellement dans la gamme 0,5 µm à 5 µm.

La couche de revêtement est déposée sur le feuillard par des méthodes d'impression comprenant notamment la sérigraphie, la flexographie, l'héliogravure, l'offset ou le jet d'encre, qui permet d'enduire des compositions à base de particules métalliques.

Du fait de cette relativement faible épaisseur, le revêtement est souvent qualifié de « film ».

Dans certains cas, le revêtement s'étend sur toute la surface du substrat.

Toutefois, avantageusement, le revêtement ne s'étend pas sur toute la surface du substrat : en effet, le revêtement peut être formé de sorte que le feuillard métallique reste non revêtu au niveau de ses régions de bord ou au centre des feuillets.

L'alternance successive de zones enduites et non enduites sur l'une des faces du feuillard métallique définit le motif. Les zones non revêtues en bord de feuillard sont appelées les marges, les zones non revêtues encadrées par deux zones revêtues sont appelées les interbandes. La largeur des marges et interbandes est variable.

Dans le cadre de la fabrication du collecteur, une bobine de feuillard métallique, c'est-à-dire un enroulement de feuillard, est d'abord fabriquée. Puis, la fabrication d'un feuillard revêtu est réalisée par dépose en continu de couches de revêtement sur le substrat (la couche métallique), à savoir la ou les surfaces d'une bobine de feuillard métallique elle-même déroulée en continu.

Lorsque le feuillard comporte une bande enduite et deux marges sur les deux bords du feuillard métallique, le feuillard est considéré comme un produit fini. A contrario, en présence d'une ou plusieurs interbandes, le feuillard est qualifié de produit semi-fini, le feuillard étant destiné à générer plusieurs produits finis.

Que le produit soit un produit fini ou semi-fini, la diversité des longueurs de bobines de collecteurs de courant impose de pouvoir relier mécaniquement les extrémités transversales de deux produits. Une telle opération est appelée un raboutage transversal.

L'opération de raboutage transversal est utile pour différents cas survenant en pratique. Parmi ces cas, il peut être cité la situation dans laquelle la longueur des bobines de feuillards métalliques est inférieure à la longueur attendue pour le produit ou pour assurer l'embarrage de la machine de dépose continue, le cas correspondant à la nécessité de supprimer une partie du feuillard du fait de la non-conformité de la partie à des critères de qualité, la casse de la bobine de feuillard métallique lors de l'opération de dépose du ou des revêtements. Un autre cas est celui de la mise en place d'un morceau de feuillard métallique, ayant une fonction protectrice ou esthétique, préférentiellement non revêtu, relié à l'extrémité transversale située à la fin de la bobine de produit fini ou semi-fini (couramment appelé « traiter »), mais également d'un morceau de feuillard métallique relié à l'extrémité transversale située au début de la bobine (couramment appelé « leader »).

Il est souhaitable qu'une telle opération permettant de raccorder deux feuillards métalliques dont au moins un est revêtu soit la plus efficace possible que ce soit du point de vue de la qualité du raccord mais également de son insertion dans l'ensemble du processus de fabrication d'un collecteur de courant.

Plusieurs techniques existent pour réaliser une opération de raboutage impliquant des feuillards métalliques.

Il est connu de mettre en oeuvre d'abord une ablation chimique, mécanique ou autres des revêtements de l'ensemble des faces puis d'effectuer une soudure ultrasonore des deux parties mises à nu de feuillard métallique ainsi obtenues.

Cependant, une telle technique pose de multiples problèmes.

D'une part, l'opération d'ablation est une opération lourde en termes d'équipements et de modalités opérationnelles impactant négativement l'efficacité de l'opération de raboutage.

En outre, l'option la plus accessible, à savoir l'ablation chimique par solvants, présente un risque significatif de pollution donc de dégradation de la qualité du produit fini ou semi-fini. D'autre part, pour certaines natures chimiques de l'enduit, l'ablation chimique est inefficace.

Une autre technique connue est d'appliquer une substance adhésive ou une bande adhésive sur une face ou deux faces à chacune des extrémités des feuillards à raccorder. L'application est mise en oeuvre transversalement à la longueur du feuillard. L'emploi d'un ruban d'adhésif permet d'une part d'assurer une bonne résistance mécanique et d'autre part de garantir une bonne continuité électrique entre les parties métalliques.

Cependant, cette technique présente plusieurs inconvénients, impactant la qualité des produits finis et semi-finis ainsi que la pleine viabilité de leur transformation. En pratique, l'exploitation d'adhésif pour l'opération de raboutage se révèle fastidieuse, complexe, et impacte donc significativement les opérations de production de feuillards revêtus. Les défauts sont détaillés dans ce qui suit.

Compte-tenu de la force de traction exercée lors de la pose du substrat généralement plastique de la bande adhésive et de son retrait naturel après dépose, des défauts de rides longitudinales apparaissent au niveau de la zone de raccordement.

En outre, dans certains cas, le matériau de la bande adhésive est incompatible avec la tenue en température exigible pour la fabrication du feuillard, ce qui entraîne un fort risque de casse lors des opérations mises en oeuvre après l'opération de raboutage.

De plus, il existe un risque de pollution des autres opérations du fait que le matériau de la bande adhésive est chimiquement un corps étranger.

Enfin, une surépaisseur au niveau de la zone de raboutage entre les deux feuillards correspondant à l'épaisseur de la bande adhésive est générée. Cela fait courir un risque d'altération notamment par embossage des feuillards.

La demanderesse a ainsi identifié que l'amélioration du procédé de fabrication d'un collecteur suppose de déterminer un procédé de raccordement entre un élément métallique et un feuillard métallique revêtu d'un revêtement qui soit de mise en oeuvre plus simple et permette d'améliorer la qualité du raccord entre l'élément métallique et le feuillard métallique revêtu.

Cela a conduit la demanderesse à tester de nombreuses alternatives.

Notamment, sans succès, la demanderesse a testé le soudage par laser, l'assemblage par brasage, le soudage par application d'impulsions magnétiques, le lessivage de surface par ablation laser ou encore le lessivage par application d'ondes ultrasonores.

Aucun de ces tests n'a conduit à un procédé de raccordement satisfaisant d'un point de vue industriel.

Seul le soudage par ultrasons proposé permet d'obtenir un raccord homogène, une résistance suffisante à la traction et de résoudre les problématiques des techniques testées par la demanderesse.

Suivant des modes de réalisation particuliers, le procédé de fabrication comprend une ou plusieurs des caractéristiques suivantes, prise(s) isolément ou suivant toutes les combinaisons techniquement possibles :
- lors de l'étape d'application, une soudure entre un matériau non-métallique et le feuillard est réalisée sur au moins une partie de la surface de superposition.
- lors de l'étape de superposition du feuillard, la surface de superposition comporte au moins une partie du revêtement, et lors de l'étape d'application, la ligne le long de laquelle les ultrasons sont appliqués par la sonotrode sur la surface de superposition comporte au moins une partie du revêtement.
- le feuillard métallique est revêtu d'un revêtement sur au moins une zone dite zone revêtue, le revêtement étant enduit sur le feuillard et, lors de l'étape de superposition, la surface de superposition comportant au moins une partie de la zone revêtue.
- le matériau de revêtement comprend un matériau liant de nature polymérique.
- le matériau de revêtement consiste en au moins des particules.
- le matériau de revêtement comporte au moins un polymère et des particules.
- le matériau de revêtement consiste en au moins un polymère et des particules.
- le matériau de revêtement comporte au moins un liant et des particules.
- le matériau de revêtement consiste en au moins un liant et des particules.
- le matériau de revêtement comporte des particules dispersées dans au moins un liant.
- le matériau de revêtement consiste en des particules dispersées dans au moins un liant.
- lors de l'étape de soudure, les ultrasons appliqués présentent une fréquence comprise entre 40 kiloHertz et 100 kiloHertz.
- le feuillard présente une épaisseur, l'épaisseur du feuillard étant comprise entre 5 microns et 20 microns.
- le revêtement présente une épaisseur comprise entre 10 nanomètres et 100 micromètres.
- le feuillard présente une succession selon un axe de zones revêtues et non revêtues formant un motif, la surface de superposition présentant ainsi une succession de zones revêtues et non revêtues, l'étape d'application étant caractérisée par un jeu de paramètres, les jeux de paramètres étant différents lorsque l'étape d'application concerne une zone revêtue et lorsque l'étape d'application concerne une zone non revêtue.
- le procédé comporte, en outre, une étape de détection des zones revêtues.
- l'élément métallique est un feuillard métallique, un feuillard métallique revêtu ou une prise de contact.

La présente description se rapporte également à un banc de raboutage comprenant un dispositif de raccordement d'un élément métallique et d'un feuillard métallique revêtu d'un revêtement, le feuillard métallique revêtu étant destiné à former un collecteur de courant, le revêtement étant réalisé en un matériau de revêtement, le matériau de revêtement étant distinct du matériau du feuillard, le dispositif comportant un organe d'appui sur lequel le feuillard revêtu et l'élément métallique sont superposés sur une surface de superposition, et une soudeuse à ultrasons comprenant une sonotrode propre à appliquer des ultrasons pour souder la surface de superposition le long d'une ligne.

Suivant un mode de réalisation particulier, le banc de raboutage comporte, en outre, un capteur permettant de détecter en temps réel des variations de nature, d'aspect et de structure, et en particulier la présence ou non de revêtement, de la zone présente sous la sonotrode.

La présente description concerne aussi un collecteur de courant obtenu après mise en oeuvre du procédé de fabrication précédemment décrit.

La présente description se rapporte également à Système, notamment batterie ou supercondensateur, comportant un collecteur de courant tel que précédemment décrit.

D'autres caractéristiques et avantages de l'invention apparaîtront à la lecture de la description qui suit de modes de réalisation de l'invention, donnés à titre d'exemple uniquement et en référence aux dessins qui sont :
- figure 1, un ordinogramme d'un exemple de mise en oeuvre d'un procédé de fabrication d'un collecteur de courant comportant une phase de raccordement,
- figure 2, une vue schématique d'un exemple de feuillard métallique revêtu destiné à former un collecteur de courant,
- figure 3, un schéma-bloc d'un exemple de banc de raboutage comportant une sonotrode,
- figure 4, une vue en perspective de la sonotrode de la figure 3,
- figure 5, une vue d'une partie du banc de raboutage,
- figure 6, un ordinogramme d'un exemple de mise en oeuvre de la phase de raccordement de la figure 1,
- figure 7, une vue schématique des localisations de prélèvement d'un exemple de feuillard métallique revêtu,
- figure 8, une vue en coupe d'une zone d'interbande après soudage avec un premier jeu de paramètres.
- figure 9, une vue en coupe de la même zone d'interbande que la zone de la figure 8 mais avant l'opération de soudage,
- figure 10, une vue en coupe d'une zone correspondant à la première zone de revêtement après soudage avec un deuxième jeu de paramètres,
- figure 11, une vue en coupe de la même zone que la zone de la figure 10 mais avant l'opération de soudage,
- figure 12, une vue en coupe d'une zone correspondant à la zone de la figure 10 après soudage avec le premier jeu de paramètres, et
- figure 13, une représentation schématique de la configuration obtenue à une étape de mise en oeuvre du procédé de raccordement selon la figure 6 lorsque le raccordement est effectué entre un feuillard métallique revêtu et une prise de contact.

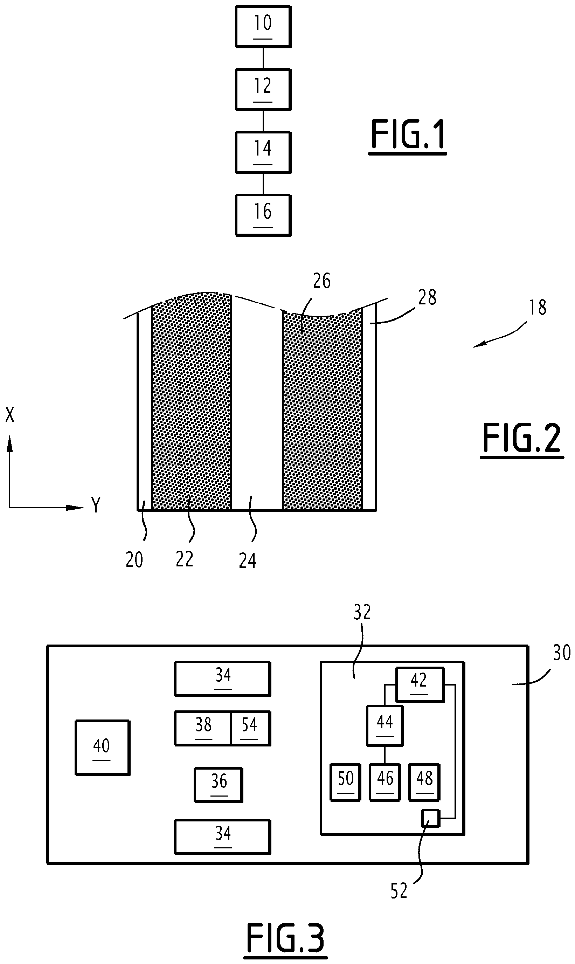

Un exemple de procédé de fabrication d'un collecteur de courant pour batterie est maintenant décrit en référence à la figure 1 qui illustre un ordinogramme de mise en oeuvre dudit procédé de fabrication.

Le procédé de fabrication comporte quatre phases : une phase d'obtention 10, une phase d'enduction 12, une phase de raccordement 14 et une phase de finition 16.

Lors de la phase d'obtention 10, il est obtenu un feuillard métallique non revêtu.

Selon un exemple, le feuillard métallique est acheté à un fournisseur.

En variante, le feuillard métallique est fabriqué à partir du métal.

Lors de la phase d'enduction 12, le feuillard métallique est enduit par un revêtement pour obtenir un feuillard métallique revêtu 18.

Comme expliqué précédemment le revêtement est une couche, homogène et continue, faite en un matériau ou mélange de matériaux présentant une épaisseur relativement faible. Il est à noter que le revêtement est caractérisé par son homogénéité et notamment l'homogénéité de son épaisseur sur toute sa surface, son aspect (la présence de point de démouillage, de gradient de séchage, et autres défauts), sa rugosité et la résolution des bordures du film (ou contours du film).

Le revêtement peut être formé grâce à une large gamme de techniques telles que les procédés d'impression (flexographie, héliographie, héliogravure, offset, jet d'encre...) et d'enduction (enduction par filière plate souvent désignée sous le terme anglais « slot-die », revêtement par rideau souvent désigné par l'expression « curtain coating », enduction à la racle souvent désignée par l'expression « knife coating », ...). Ces méthodes de fabrication sont compatibles avec la production à grande échelle qui devra de préférence être réalisée grâce à des procédés continus tels que les procédés au déroulé plus connus sous le nom anglais de roll-to-roll.

Alternativement, la technique de dépôt centrifuge aussi appelée dépôt à la tournette (plus connue sous son nom anglais de spin coating) est une méthode très répandue de déposition de couche mince sur une surface plane. Cette méthode consiste à déposer une goutte sur un plateau tournant, la goutte s'étalant alors par centrifugation, pour former une couche.

De manière alternative, une méthode de dip-coating peut être utilisée pour former le revêtement. Cette technique s'appuie sur un principe similaire à l'enduction centrifuge. Mais, dans ce cas, le substrat est trempé dans la solution et il est retiré avec une vitesse et un angle contrôlés.

En variante, une autre méthode dite de « doctor blading » est employable. Selon ce procédé, une lame de rasoir subit une translation à une distance définie du substrat dans le but d'étaler le matériau du revêtement. Le volume déposé, la vitesse de translation et la hauteur de la lame permettent de définir l'épaisseur finale du revêtement.

D'autres méthodes de dépôt par voie sèche peuvent être employées : le revêtement peut être formé par pulvérisation cathodique (dite "sputter coating"), dépôt en phase vapeur (dite physical vapor deposition ou PVD), extrusion de matière fondue (dite melt extrusion) ou procédés de polissage.

A l'issue de la phase d'enduction 12, il est obtenu le feuillard 18 destiné à devenir un collecteur de courant d'une batterie représenté sur la figure 2.

Le feuillard 18 correspond à un produit semi-fini tel que décrit précédemment. Les remarques précédentes s'appliquent donc ici et ne sont pas répétées.

Le feuillard 18 s'étend principalement selon une direction longitudinale symbolisée par un axe X sur la figure 2. Il est également une direction transversale comme une direction perpendiculaire à la direction longitudinale et contenue dans le plan du feuillard 18. La direction transversale est symbolisée par un axe Y sur la figure 2. Aussi, dans la suite, la direction longitudinale est dénommée direction longitudinale X alors que la direction transversale est dénommée direction transversale Y.

Dans ce domaine, l'extension selon la direction transversale Y du feuillard 18 est appelée selon le terme de « laize ». La laize dépend du feuillard 18 considéré, la laize est généralement comprise entre 50 millimètres (mm) et 1200 mm.

Le motif du feuillard 18 dans le cas représenté est un motif à une seule interbande, c'est-à-dire que selon la direction longitudinale, depuis une extrémité à l'autre du feuillard 18, il se trouve successivement une première marge 20, une première bande revêtue 22, une interbande 24, une deuxième bande revêtue 26 et une deuxième marge 28.

Lors de la phase de raccordement 14, le but est de raccorder ce feuillard 18 métallique à un élément métallique.

A titre d'exemple, l'élément métallique est un autre feuillard 18 métallique revêtu ou non.

Selon un autre mode de réalisation, l'élément métallique est une prise de contact 72.

Dans chacun des cas, la difficulté est que l'ensemble à raccorder présente un motif selon l'axe transversal.

Dans un premier temps, il est d'abord illustré le cas d'un raccordement à un feuillard 18 métallique revêtu identique au feuillard 18 métallique de la figure 2. Il s'agit alors d'un raboutage transversal.

Le feuillard 18 métallique de la figure 2 est appelé « premier feuillard 18_1 » dans la suite tandis que l'autre feuillard 18 métallique est appelé « deuxième feuillard 18_2 ».

Pour procéder au raccordement des deux feuillards 18, il est utilisé un banc de raboutage 30 pourvu d'un dispositif de raccordement.

Le banc de raboutage 30 est représenté sous forme de schéma-bloc sur la figure 3.

Le banc de raboutage 30 comporte une soudeuse 32 à ultrasons, des porte-bobines 34, une enclume 36, un organe d'appui 38 et un contrôleur 40.

La soudeuse 32 comporte une source 42 à ultrasons, un amplificateur 44, une sonotrode 46 rotative, un vérin 48, un organe de déplacement 50 et un capteur 52.

D'autres soudeuses 32 existent, notamment des soudeuses 32 pourvues de capteurs 52 différents.

La source 42 à ultrasons est propre à appliquer des ondes ultrasonores à la sonotrode 46, les ondes ultrasonores présentant une fréquence et une amplitude réglables.

La source 42 à ultrasons est, par exemple, un transducteur piézoélectrique.

La fréquence des ondes ultrasonores appliquées est typiquement comprise entre 20 KiloHertz (kHz) et 100 kHz.

De préférence, la fréquence des ondes ultrasonores appliquées est supérieure à 40 kHz.

L'amplificateur 44 permet d'amplifier l'amplitude des ondes ultrasonores appliquées par la source 42 à ultrasons.

L'amplificateur 44 est souvent désigné sous le terme anglais de « booster ».

La sonotrode 46 est une pièce métallique qui est excitée par des ondes ultrasonores et résonne à la fréquence de l'onde ultrasonore par une contraction mécanique présentant une amplitude de quelques micromètres. En mettant en contact la sonotrode 46 avec la surface à souder, la sonotrode 46 permet une restitution de l'énergie électromagnétique des ondes ultrasonores à la surface à souder sous forme d'une énergie de vibration ultrasonore.

Dans l'exemple proposé, le déplacement de la vibration de la sonotrode 46 a lieu dans un plan parallèle au plan défini par la direction longitudinale X et la direction transversale Y.

En l'espèce, la sonotrode 46 vibre à une fréquence comprise entre 20 kHz et 100 kHz, préférentiellement supérieure à 40 kHz. Dans l'exemple décrit, sans que cela soit obligatoire, la sonotrode 46 est dépourvue de gravures.

Il existe différent type de sonotrode : la forme de la sonotrode 46 peut être ronde, carrée, avec denture ou profilée.

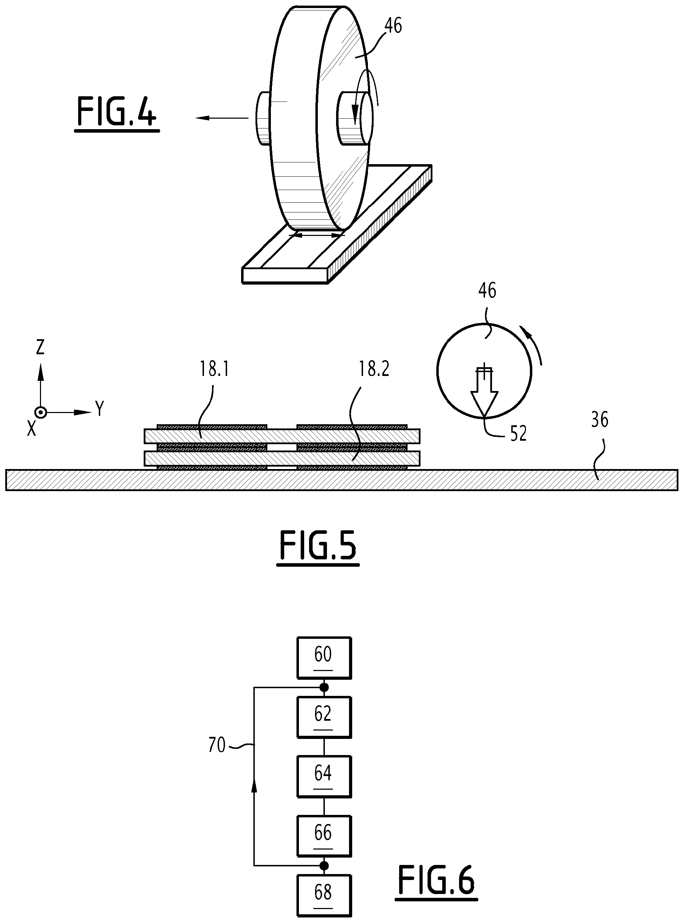

En l'espèce, comme visible à figure 4, la sonotrode 46 a la forme d'un cylindre à base circulaire.

Les sonotrodes 46 sont généralement réalisées en titane, en aluminium ou en acier.

La sonotrode 46 est, en outre, propre à effectuer une rotation autour d'un axe parallèle à la direction longitudinale X ou à la direction transversale Y et perpendiculaire à sa direction de déplacement.

Le vérin 48 est relié à la sonotrode 46 pour assurer que la sonotrode 46 exerce une pression déterminée sur les éléments à souder, la pression étant comprise entre 1 bar et 5 bars.

L'organe de déplacement 50 est un organe propre à déplacer la sonotrode 46 en translation comme visible sur la figure 5.

L'organe de déplacement 50 permet de définir une course pour le sonotrode 46, la course étant une ligne correspondant au cordon de soudure à réaliser, la ligne étant en l'espèce parallèle à la direction transversale Y.

L'organe de déplacement 50 est, en outre, propre à contrôler la vitesse du déplacement de la sonotrode 46, la vitesse étant comprise entre 0 et 5 m/min.

Le capteur 52 est propre à détecter des variations de nature, d'aspect et de structure du feuillard 18, et en particulier la présence ou non de revêtement. Cette détection peut être effectuée en temps réel.

Plus précisément, le capteur 52 est propre à détecter une transition entre des zones revêtues et des zones non revêtues du feuillard 18 ainsi que les extrémités d'un feuillard 18.

Selon un exemple particulier, le capteur 52 est un capteur optique qui comporte une source de lumière, des fibres optiques pour le transport de la lumière de et vers la zone de détection ainsi qu'un photodétecteur. La source lumineuse éclaire le feuillard 18 à une puissance fixe via une fibre optique. La lumière réfléchie par le feuillard 18 est envoyée au photodétecteur via une autre fibre optique. L'intensité du signal en sortie du photodétecteur retranscrit l'absorption de la lumière par le feuillard 18. La présence d'un enduit modifie la quantité de lumière transmise au photodétecteur, ce qui permet la détection de présence d'un enduit.

Les porte-bobines 34 sont des cylindres propres à porter chacune un feuillard 18 agencée sous forme d'une bobine. En l'espèce, le banc de raboutage 30 comporte deux porte-bobines 34, un premier porte-bobine 34 pour le premier feuillard 18 et un deuxième porte-bobine 34 pour le deuxième feuillard 18.

L'enclume 36 est une surface d'appui présentant une longueur au moins équivalente à la course de la sonotrode 46.

L'enclume 36 est, par exemple, en acier et présente une surface rectifiée.

L'enclume 36 est disposée de sorte que lorsque la sonotrode 46 est en fonctionnement, la sonotrode 46 et l'enclume 36 sont en regard l'une de l'autre.

L'organe d'appui 38 est une surface de support de feuillards 18 à rabouter.

L'organe d'appui 38 est pourvu d'au moins un organe de maintien 54, chaque organe de maintien 54 étant propre à maintenir des feuillards 18.

L'organe de maintien 54 est, par exemple, un organe pneumatique.

En variante, l'organe de maintien 54 est un organe mécanique utilisant une force de coincement similairement à un étau.

L'ensemble des organes de maintien est parfois désigné sous le terme de « presse ».

Le contrôleur 40 adapté pour contrôler les différents éléments du banc de raboutage 30.

Plus précisément, le contrôleur 40 contrôle le jeu de paramètres appliqué lors d'un soudage effectué sur le banc de raboutage 30.

Le jeu de paramètres est un jeu de deux types de paramètres.

Le premier type de paramètres regroupe les paramètres caractérisant l'oscillation ultrasonore appliquée sur la surface à souder.

Tout paramètre permettant de caractériser l'oscillation ultrasonore est envisageable. Le plus simple est de considérer la fréquence de vibration et l'amplitude de vibration de la sonotrode 46.

Le deuxième type de paramètres regroupe les paramètres caractérisant le balayage par la sonotrode 46 de la zone à souder.

La vitesse de la sonotrode 46 en rotation, la vitesse de déplacement de la sonotrode 46 en translation et la pression de la sonotrode 46 sont des exemples de tels paramètres.

L'emploi du banc de raboutage 30 permet la mise en oeuvre de la phase de raccordement 14 des deux feuillards 18 qui est maintenant décrit en référence à la figure 6.

La phase de raccordement 14 comporte une étape de superposition 60, une étape de détection 62 optique, une étape d'application 64, une étape de déplacement 66 et une étape de nettoyage 68.

Il est à noter que, lors de la phase de raccordement 14, l'ordre précité des étapes n'implique pas un ordre de mise en oeuvre des étapes. En particulier, l'étape de nettoyage 68 peut être mise en oeuvre à la fin du procédé ou simultanément à l'une des autres étapes 60, 62, 64 ou 66 ou encore entre l'une des étapes précitées.

Lors de l'étape de superposition 60, le feuillard 18 et l'élément métallique sont superposés sur une surface de superposition.

La surface de superposition est maintenue sur l'organe d'appui 38 au niveau de l'enclume 36.

L'organe d'appui 38 est, selon l'exemple décrit, une table d'appui correspondant à une surface de superposition plane.

En variante, l'organe d'appui 38 est tel que la surface de superposition n'est pas plane, typiquement cylindrique.

Lors de l'étape de détection 62 optique, le capteur 52 détecte la nature de la zone de la surface de superposition (revêtue ou non revêtue).

Pour cela, le capteur optique 52 reçoit la lumière provenant de la zone.

Selon la quantité de lumière reçue, le capteur optique 52 détermine si la surface est revêtue ou non. Plus précisément, lorsque la quantité de lumière reçue est faible, le capteur optique 52 indique que la surface est revêtue et réciproquement, lorsque la quantité de lumière reçue est importante, le capteur optique 52 indique que la surface est non revêtue.

Lors de l'étape d'application 64, la sonotrode 46 est placée en contact avec la zone déterminée et applique des ultrasons à la zone déterminée. L'ensemble de ces actions respecte un jeu de paramètres spécifique comme défini précédemment.

Le jeu de paramètres dépend de la nature de la zone déterminée.

Cela signifie que le jeu de paramètres est différent lorsque l'étape d'application 64 concerne une zone revêtue et lorsque l'étape d'application 64 concerne une zone non revêtue.

L'ajustement du jeu de paramètres est réalisé par le contrôleur 40 en fonction de la détection faite par le capteur optique 52 de sorte que l'ajustement est autonome pour l'opérateur.

D'un point de vue physique, l'onde ultrasonore génère une vibration permettant, de manière localisée, la translation des feuillards 18 métalliques l'un par rapport à l'autre. La rugosité de surface des deux feuillards 18 génère un phénomène de friction, provoquant localement une élévation de température suffisante pour provoquer une recombinaison intermoléculaire des deux feuillards 18 au refroidissement, créant ainsi une soudure.

Lors de l'étape de déplacement 66, la sonotrode 46 est déplacée par le dispositif d'alignement.

De préférence, la sonotrode 46 est déplacée le long d'une ligne rectiligne pour former un cordon de soudure rectiligne et continu.

Dans le cas proposé, la sonotrode 46 est déplacée le long d'une ligne parallèle à la direction transversale Y.

Les étapes de détection optique, d'application et de déplacement sont réitérées jusqu'à la fin du motif du premier feuillard 18. Cet aspect itératif est montré par la flèche 70 sur la figure 6.

Il ainsi obtenu un raboutage des deux feuillards 18 présentant un cordon de soudure ou une ligne de soudure.

Lors de l'étape de nettoyage 68, la sonotrode 46 est nettoyée par utilisation d'un laser.

L'exposition de la sonotrode 46 au laser permet de dégrader et de supprimer thermiquement les dépôts accumulés sur la sonotrode 46.

De préférence, le laser présente une taille de faisceau supérieure ou égale à la plus grande dimension de la sonotrode 46, de manière à traiter l'intégralité de la surface de la sonotrode 46 en contact avec les feuillards 18 à rabouter, cette surface spécifique de la sonotrode 46 étant souvent appelée bande de roulement.

Cela permet d'éviter l'encrassement de la bande de roulement par le revêtement. Il est ainsi garanti la propreté de la sonotrode 46 tout au long de la phase de raccordement 14. Ceci permet d'assurer la continuité de l'efficacité de la sonotrode 46, et donc l'homogénéité de la qualité de soudure tout le long du cordon de soudure.

En variante, le nettoyage est réalisé par une technique mécanique.

Par exemple, une racle peut être employée en la positionnant à fleur de la bande de roulement de la sonotrode 46.

Selon un autre exemple, une surface abrasive est utilisée. Pour faciliter l'emploi de la surface abrasive, celle-ci est montée sur une roue propre à tourner dans un sens opposé au sens de rotation de la sonotrode 46. La surface abrasive peut également être montée sur un outil fixe.

Une autre technique mécanique est de générer un différentiel de vitesse de rotation de la sonotrode 46 et la vitesse imposée par le dispositif d'alignement. Cela permet de générer un phénomène de friction au niveau de la bande de roulement de la sonotrode 46 éliminant les résidus de la couche de revêtement.

Selon une autre variante, le nettoyage est réalisé en utilisant une technique chimique par application d'un produit détruisant le revêtement. Le terme « décapage » est souvent utilisé dans ce cas.

Selon encore une autre variante, le nettoyage est réalisé en combinant plusieurs des techniques précédentes, notamment des techniques de type différent.

Lors de la phase de finition 16, le produit ainsi obtenu est mis aux dimensions requises pour l'application souhaitée.

Il est ainsi obtenu un collecteur de courant.

Le procédé de fabrication de collecteur de courant qui vient d'être décrit est de mise en oeuvre plus simple et permet d'améliorer la qualité du collecteur de courant.

Cela découle notamment des avantages procurés par la phase de raccordement 14.

La phase de raccordement 14 permet en particulier d'obtenir un raccordement entre les deux feuillards 18 présentant une épaisseur réduite.

En effet, le cordon de soudure obtenu présente une épaisseur bien inférieure à l'épaisseur d'un ruban adhésif.

Il est également à noter que la réalisation d'un soudage à ultrasons est bien plus rapide que la mise en place d'un adhésif.

La capacité à détecter les caractéristiques du substrat dans la zone à souder, revêtu/non revêtu en particulier, permet l'ajustement à façon et en temps réel des paramètres utilisés pour le soudage.

Cet ajustement à façon et en temps réel à la nature du substrat en contact avec la sonotrode 46 permet, dans le cas d'un raboutage transversal, de garantir une qualité de soudure similaire en tout point de la ligne de soudure, notamment au moins équivalente à 60% de la résistance à la rupture d'un feuillard 18 aluminium sans soudure, préférentiellement 80%. Une telle résistance à la rupture correspond à une résistance à la rupture suffisante pour l'application à des collecteurs.

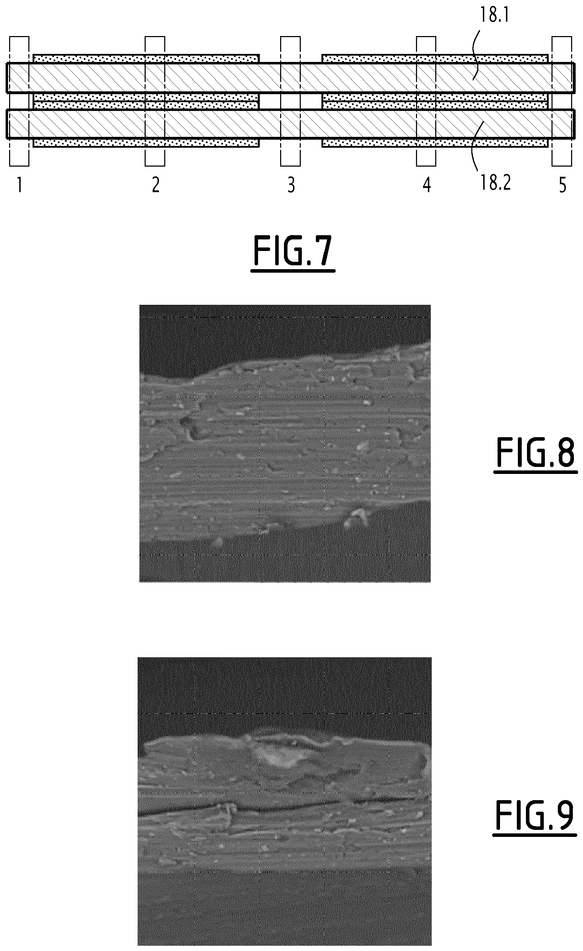

La bonne résistance à la rupture du feuillard 18 rabouté a été démontrée expérimentalement par des tests de la demanderesse. Ces tests sont décrits dans ce qui suit en référence à la figure 7.

Les tests ont été effectués sur des feuillards 18 similaires au feuillard 18 de la figure 2. Les feuillards 18 sont des feuillards aluminium revêtus d'une couche de revêtement sur les deux surfaces selon un motif marge / revêtement / interbande / revêtement / marge. En outre, les feuillards 18 présentent une épaisseur de 12 µm.

La couche de revêtement est formée par dépôt d'un matériau à base de carbone (70% en poids de polymère thermoplastique et 30% en poids de noir de carbone), sous forme d'une couche fine sur le même feuillard d'aluminium. L'épaisseur du revêtement après séchage est comprise entre 1 µm et 1,5 µm.

Après mise en oeuvre du raboutage, il est prélevé des échantillons au niveau de chacune des marges, de chacun des revêtements et de l'interbande. Les échantillons présentent chacun une laize (largeur) de 15 millimètres (mm) et une longueur de 160 mm.

Ces échantillons sont numérotés pour la suite de 1 à 5. En parcourant le feuillard 18 rabouté le long d'une ligne parallèle à la direction transversale Y, l'échantillon 1 correspond à la première marge, l'échantillon 2 correspond à la première zone de revêtement, l'échantillon 3 correspond à l'interbande, l'échantillon 4 correspond à la deuxième zone de revêtement et l'échantillon 5 correspond à la deuxième marge.

La résistance à la traction est une mesure de l'effort à fournir pour faire rompre une pièce et par là, est un moyen de caractériser la solidité d'un matériau.

En l'espèce, la résistance à la traction est mesurée sur chaque échantillon à l'aide d'un dynamomètre. Les échantillons de 15mm de large et 150mm de long sont placés entre les mâchoires du dynamomètre, la traction exercée à une vitesse de 40mm/min, permet de mesurer la force maximale en Newton avant la rupture de l'échantillon.

En outre, pour éviter tout biais, la mesure est effectuée sur 10 échantillons distincts, la mesure finale correspondant à la moyenne arithmétique des différentes mesures obtenues pour les 10 échantillons.

L'échantillon de référence utilisé est un échantillon d'un feuillard d'aluminium présentant les mêmes dimensions que les autres échantillons.

Les mesures de résistance à la traction pour chaque échantillon sont présentées de manière normalisée par rapport à l'échantillon de référence dans le tableau 1 qui suit.

**Tableau 1 : Valeur normalisée de la résistance à la traction pour cinq échantillons**

| Echantillon | 1 | 2 | 3 | 4 | 5 |
|---|---|---|---|---|---|
| Mesure | 80% ± 4% | 78% ± 6% | 82% ±3% | 79% ± 6% | 81% ± 5% |

Il est à noter que la valeur normalisée de résistance la plus faible est de 78%, ce qui montre bien que la qualité de la soudure est de bonne qualité à chaque endroit.

En outre, il existe une bonne homogénéité puisque l'écart entre la valeur normalisée de résistance maximale et la valeur normalisée de résistance minimale est seulement de 4%.

La qualité de soudure peut également être vérifiée en étudiant l'état de l'interface entre les deux feuillards 18 raboutés, dans les zones revêtues et non revêtues. Cette étude est montrée par les figures 8 à 12.

La figure 8 correspond à la vue en coupe d'une zone d'interbande après soudage avec un premier jeu de paramètres. Le premier jeu de paramètres est adapté pour réaliser une ligne de soudure de bonne qualité dans une zone non revêtue.

La figure 9 correspond à la vue en coupe de la même zone d'interbande que la zone de la figure 8 mais avant l'opération de soudage.

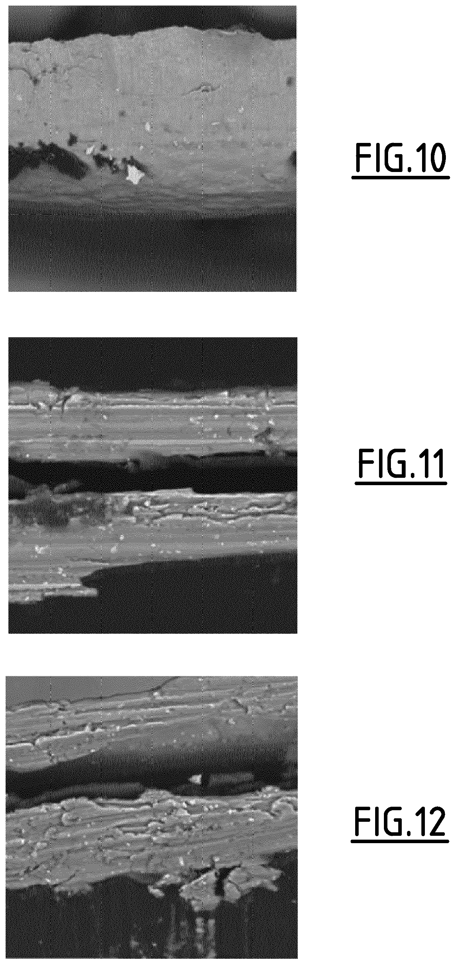

La figure 10 correspond à la vue en coupe d'une zone correspondant à la première zone de revêtement après soudage avec un deuxième jeu de paramètres. Le deuxième jeu de paramètres est adapté pour réaliser une ligne de soudure de bonne qualité dans une zone revêtue. Le deuxième jeu de paramètres est donc distinct du premier jeu de paramètres.

La figure 11 correspond à la vue en coupe de la même zone que la zone de la figure 10 mais avant l'opération de soudage.

La figure 12 correspond à la vue en coupe d'une zone correspondant à la zone de la figure 10 après soudage avec le premier jeu de paramètres, c'est-à-dire le jeu de paramètres adapté pour une zone non revêtue.

La comparaison des figures 8 et 9 d'une part (cas non revêtu) et la comparaison des figures 10 et 11 d'autre part (cas revêtu) permet de mettre en évidence des interfaces similaires entre les deux feuillards 18 métalliques, à savoir une complète recombinaison entre les deux masses métalliques. Cette observation est cohérente avec des mesures de résistance en traction homogène constatées en référence au tableau 1.

La comparaison des figures 10 et 12 montre par ailleurs l'importance d'appliquer des jeux de paramètres spécifiques puisque dans la figure 12, il est observé une absence de recombinaison métallique, et donc une absence de soudure entre les deux feuillards 18.

Ces différents tests montrent bien la bonne qualité de la soudure et par là que le procédé de fabrication d'un collecteur de courant est de mise en oeuvre plus simple et permet d'améliorer la qualité du collecteur de courant.

Le procédé peut s'appliquer dans une pluralité de situations de raboutage du fait que l'alternance entre les zones revêtues et les zone non revêtues est bien maîtrisée.

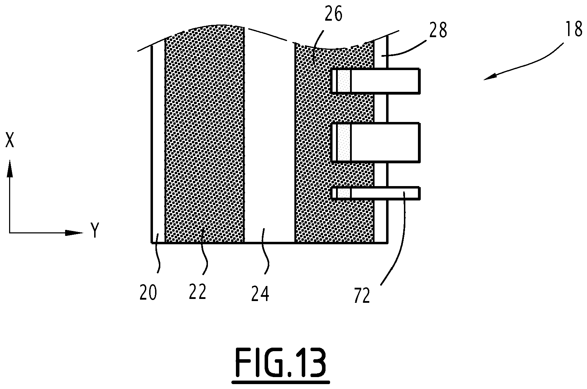

En particulier, comme illustré par la figure 13, la phase de raboutage peut être appliquée pour un raboutage longitudinal créant un contact physique direct entre le substrat métallique et chaque prise de contact 72 à raccorder pour assurer une continuité électrique.

La prise de contact 72 est un feuillard 18 ou une plaque.

Le matériau de la prise de contact 72 est de nature variable mais préférentiellement identique au métal non revêtu du feuillard 18.

Les mêmes avantages que précédemment s'appliquent aussi dans ce cas.

En outre, dans chacun des cas, il est possible de réaliser plusieurs lignes de soudure successives si cela est nécessaire pour l'application.

De plus, il convient de souligner que le procédé de fabrication permet de réaliser, lors de l'étape d'application, une soudure entre un matériau non-métallique et le feuillard sur au moins une partie de la surface de superposition.

Cela évite notamment une étape consistant à enlever le revêtement pour effectuer uniquement une soudure de type métal sur métal par application d'ultrasons.

Plus généralement, le procédé de fabrication décrit pour le collecteur de courant peut être utilisé pour obtenir tout système comportant un tel collecteur dont notamment un supercondensateur ou une batterie.

En variante, une combinaison des modes de réalisation précédents lorsqu'elle est techniquement possible est également envisageable.

## Revendications

1. Procédé de fabrication d'un collecteur de courant pour une batterie ou un supercondensateur, le procédé de fabrication comportant une phase de raccordement d'un élément métallique et d'un feuillard (18) métallique revêtu d'un revêtement, le revêtement étant réalisé en un matériau de revêtement, le matériau de revêtement étant distinct du matériau du feuillard, la phase de raccordement comportant :
- une étape de superposition du feuillard (18) et de l'élément métallique sur une surface de superposition, et
- une étape d'application d'ultrasons par une sonotrode (46) d'une soudeuse (32) à ultrasons sur la surface de superposition le long d'une ligne pour souder la surface de superposition.

2. Procédé de fabrication selon la revendication 1, dans lequel, lors de l'étape d'application, une soudure entre un matériau non-métallique et le feuillard (18) est réalisée sur au moins une partie de la surface de superposition.

3. Procédé de fabrication selon la revendication 1 ou 2, dans lequel, lors de l'étape de superposition du feuillard, la surface de superposition comporte au moins une partie du revêtement, et lors de l'étape d'application, la ligne le long de laquelle les ultrasons sont appliqués par la sonotrode (46) sur la surface de superposition comporte au moins une partie du revêtement.

4. Procédé de fabrication selon l'une quelconque des revendications 1 à 3, dans lequel le matériau de revêtement comprend un matériau liant de nature polymérique.

5. Procédé de fabrication selon l'une quelconque des revendications 1 à 4, dans lequel le matériau de revêtement comprend des particules dispersées dans au moins un liant.

6. Procédé de fabrication selon l'une quelconque des revendications 1 à 5, dans lequel lors de l'étape de soudure, les ultrasons appliqués présentent une fréquence comprise entre 40 kiloHertz et 100 kiloHertz.

7. Procédé de fabrication selon l'une quelconque des revendications 1 à 6, dans lequel le feuillard (18) présente une épaisseur, l'épaisseur du feuillard (18) étant comprise entre 5 microns et 20 microns.

8. Procédé de fabrication selon l'une quelconque des revendications 1 à 7, dans lequel le revêtement présente une épaisseur comprise entre 10 nanomètres et 100 micromètres.

9. Procédé de fabrication selon l'une quelconque des revendications 1 à 8, dans lequel le feuillard (18) présente une succession selon un axe de zones revêtues et non revêtues formant un motif, la surface de superposition présentant ainsi une succession de zones revêtues et non revêtues, l'étape d'application étant **caractérisée par** un jeu de paramètres, les jeux de paramètres étant différents lorsque l'étape d'application concerne une zone revêtue et lorsque l'étape d'application concerne une zone non revêtue.

10. Procédé de fabrication selon la revendication 9, dans lequel le procédé comporte, en outre, une étape de détection des zones revêtues.

11. Procédé de fabrication selon l'une quelconque des revendications 1 à 10, dans lequel l'élément métallique est un feuillard (18) métallique, un feuillard (18) métallique revêtu ou une prise de contact (72).

12. Banc de raboutage (30) comprenant un dispositif de raccordement d'un élément métallique et d'un feuillard (18) métallique revêtu d'un revêtement, le feuillard métallique revêtu (18) étant destiné à former un collecteur de courant, le revêtement étant réalisé en un matériau de revêtement, le matériau de revêtement étant distinct du matériau du feuillard, le dispositif comportant :
- un organe d'appui (38) sur lequel le feuillard revêtu (18) et l'élément métallique sont superposés sur une surface de superposition, et
- une soudeuse (32) à ultrasons comprenant une sonotrode (46) propre à appliquer des ultrasons pour souder la surface de superposition le long d'une ligne.

13. Banc de raboutage (30) selon la revendication 12 comportant, en outre, un capteur (52) permettant de détecter en temps réel des variations de nature, d'aspect et de structure, et en particulier la présence ou non de revêtement, de la zone présente sous la sonotrode (46).

14. Collecteur de courant obtenu après mise en oeuvre du procédé de fabrication selon l'une quelconque des revendications 1 à 11.

15. Système, notamment batterie ou supercondensateur, comportant un collecteur de courant selon la revendication 14.
